(19) Europäisches Patentamt
European Patent Office
Office européen des brevets

(11) EP 0 900 010 B1

(12) **EUROPÄISCHE PATENTSCHRIFT**

(45) Veröffentlichungstag und Bekanntmachung des Hinweises auf die Patenterteilung:
**03.04.2002 Patentblatt 2002/14**

(21) Anmeldenummer: **97920734.7**

(22) Anmeldetag: **22.04.1997**

(51) Int Cl.$^7$: **A01N 37/52**
// (A01N37/52, 55:00, 47:38, 43:653, 43:54, 37:50)

(86) Internationale Anmeldenummer:
**PCT/EP97/02020**

(87) Internationale Veröffentlichungsnummer:
**WO 97/40674 (06.11.1997 Gazette 1997/47)**

(54) **FUNGIZIDE MISCHUNG**

FUNGICIDE MIXTURES

MELANGES FONGICIDES

(84) Benannte Vertragsstaaten:
**AT BE CH DE DK ES FI FR GB GR IE IT LI NL PT SE**

(30) Priorität:
**26.04.1996 DE 19616722**
**26.04.1996 DE 19616725**
**29.04.1996 DE 19617073**
**02.09.1996 DE 19635513**
**02.09.1996 DE 19635512**
**02.09.1996 DE 19635507**

(43) Veröffentlichungstag der Anmeldung:
**10.03.1999 Patentblatt 1999/10**

(73) Patentinhaber: **BASF AKTIENGESELLSCHAFT**
**67056 Ludwigshafen (DE)**

(72) Erfinder:
- **MÜLLER, Ruth**
  **D-67159 Friedelsheim (DE)**
- **BAYER, Herbert**
  **D-68159 Mannheim (DE)**
- **SAUTER, Hubert**
  **D-68167 Mannheim (DE)**
- **AMMERMANN, Eberhard**
  **D-64646 Heppenheim (DE)**
- **LORENZ, Gisela**
  **D-67434 Hambach (DE)**
- **STRATHMANN, Siegfried**
  **D-67117 Limburgerhof (DE)**
- **SCHELBERGER, Klaus**
  **D-67161 Gönnheim (DE)**
- **SAUR, Reinhold**
  **D-67459 Böhl-Iggelheim (DE)**

(56) Entgegenhaltungen:

| | |
|---|---|
| **EP-A- 0 531 837** | **EP-A- 0 616 771** |
| **EP-A- 0 645 091** | **EP-A- 0 648 417** |
| **WO-A-93/22921** | **WO-A-95/17818** |
| **WO-A-95/21153** | **WO-A-95/34203** |
| **WO-A-97/00012** | **WO-A-97/06678** |
| **WO-A-97/06679** | **DE-A- 19 528 651** |

- **PESTICIDE SCIENCE, Bd. 44, Nr. 1, Mai 1995, Seiten 77-79, XP002020496 FRAINE DE P J ET AL: "A NEW SERIES OF BROAD-SPECTRUM BETA-METHOXYACRYLATE FUNGICIDES WITH AN OXIME ETHER SIDE-CHAIN"**
- **PHYTOMA. LA DEFENSE DES VEGETAUX, Nr. 474, Juli 1995, Seiten 12-16, XP000612912 GOUOT J -M: "COMITE D'ACTION CONCERNANT LA RESISTANCE AUX FONGICIDES (FRAC) REUNION ANNUELLE DU GROUPE DE TRAVAIL >"**
- **RESEARCH DISCLOSURE, Nr. 348, 1.April 1993, Seite 267, COMPL XP000304224 "MIXTURES OF FUNGICIDES AND HERBICIDES"**
- **RESEARCH DISCLOSURE, Nr. 346, 1.Februar 1993, Seite 158 XP000360748 "MIXTURES OF FUNGICIDES"**
- **RESEARCH DISCLOSURE, Nr. 338, 1.Juni 1992, Seiten 506-510, XP000315713 "MIXTURES OF FUNGICIDES AND INSECTICIDES"**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 900 010 B1

Printed by Jouve, 75001 PARIS (FR)

## Beschreibung

Die vorliegende Erfindung betrifft fungizide Mischungen, welche

a) einen Oximether der Formel I,

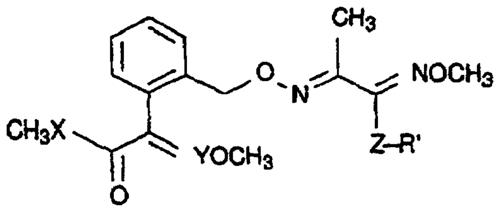

(I)

in der die Substituenten die folgende Bedeutung haben:

X Sauerstoff oder Amino (NH);

Y CH oder N;

Z Sauerstoff, Schwefel, Amino (NH) oder $C_1$-$C_4$-Alkylamino (N-$C_1$-$C_4$-Alkyl);

R' $C_1$-$C_6$-Alkyl, $C_1$-$C_6$-Halogenalkyl, $C_3$-$C_6$-Alkenyl, $C_2$-$C_6$-Halogenalkenyl, $C_3$-$C_6$-Alkinyl, $C_3$-$C_6$-Halogenalkinyl, $C_3$-$C_6$-Cycloalkyl-methyl, oder Benzyl, welches partiell oder vollständig halogeniert sein kann und/oder einen bis drei der folgenden Reste tragen kann: Cyano, $C_1$-$C_4$-Alkyl, $C_1$-$C_4$-Halogenalkyl, $C_1$-$C_4$-Alkoxy, $C_1$-$C_4$-Halogenalkoxy und $C_1$-$C_4$-Alkylthio;

und mindestens eine Verbindung aus den Gruppen b)-c) :

b.1) der Oximethercarbonsäureester der Formel IIa,

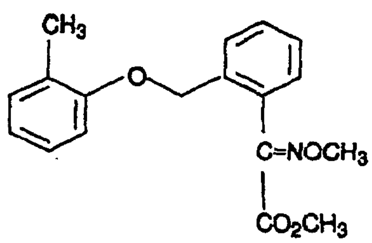

(IIa)

b.2) das Oximethercarbonsäureamid der Formel IIb

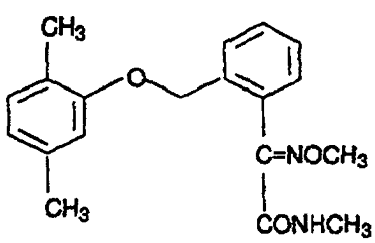

(IIb)

b.3) der Methoxyacrylsäureester der Formel IIc,

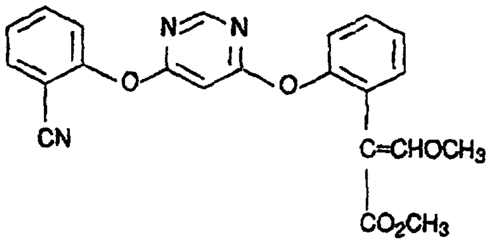

(IIc)

und/oder

c) ein Azolderivat III ausgewählt aus der Gruppe der Verbindungen III.1 bis III.17

- 1-[(2RS,4RS;2RS,4SR)-4-Brom-2- (2,4-dichlorphenyl) tetrahydrofuryl]-1H-1,2,4-triazol (III.1)

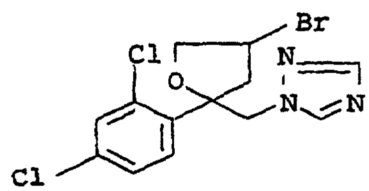

- 2-(4-Chlorphenyl)-3-cyclopropyl-1-(1H-1,2,4-triazol-1-yl)-butan-2-ol (III.2)

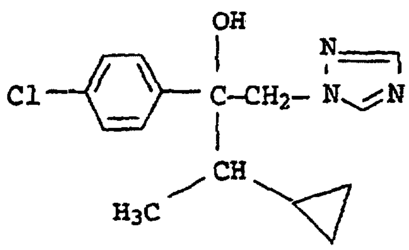

- (+) -4-Chlor-4-[4-methyl-2-(1H-1,2,4-triazol-1-ylmethyl)-1,3-dioxolan-2-yl]-phenyl-4-chlorphenylether (III.3)

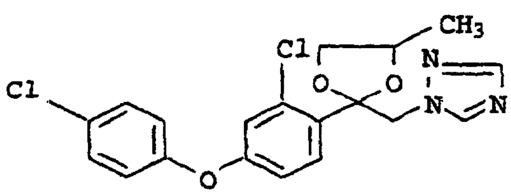

- (E)-(R,S)-1-(2,4-Dichlorphenyl)-4,4-dimethyl-2-(1H-1,2,4- triazol-1-yl)pent-1-en-3-ol (III.4)

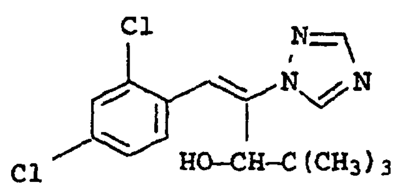

- (Z)-2-(1H-1,2,4-Triazol-1-ylmethyl)-2-(4-fluorphenyl)-3 (2-chlorphenyl)-oxiran (III.5)

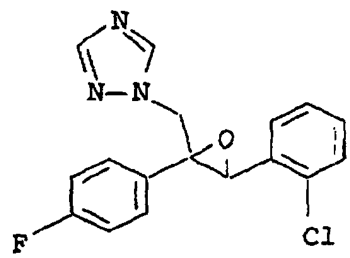

- 4-(4-Chlorphenyl)-2-phenyl-2-(1H-1,2,4-triazolylmethyl)-butyronitril (III.6)

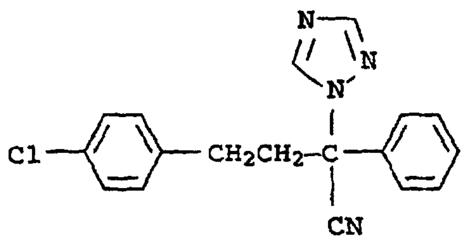

- 3-(2,4-Dichlorphenyl)-6-fluor-2-(1H-1,2,4-triazol-1-yl)chinazolin-4(3H)-on (III.7)

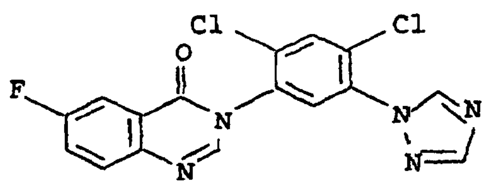

- Bis(4-fluorphenyl)(methyl)(1H-1,2,4-triazol-1-ylmethyl)silan (III.8)

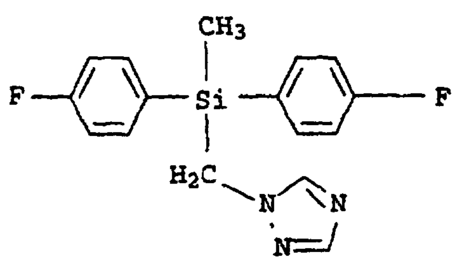

- (R,S)-2-(2,4-Dichlorphenyl)-1-(1H-1,2,4-triazol-1-yl)-hexan-2-ol (III.9)

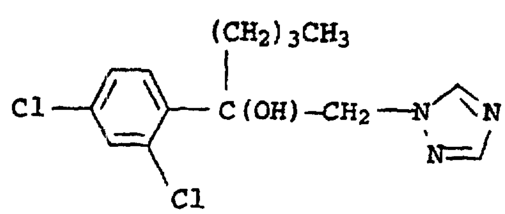

- (1RS, 5RS; 1RS,5SR)-5-(4-Chlorbenzyl)-2,2-dimethyl-1-(1H-1,2,4-triazol-1-ylmethyl)cyclopentanol (III.10)

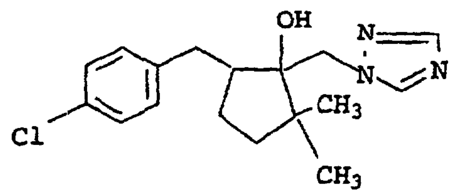

- N-Propyl-N-[2-(2,4,6-trichlorphenoxy)ethyl]imidazol-1-carboxamid (III.11)

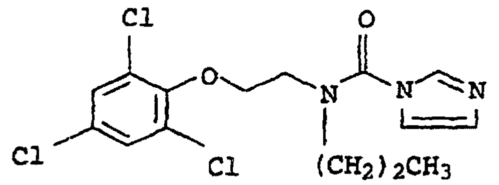

- (+)-1-[2- (2,4-Dichlorphenyl)-4-propyl-1,3-dioxolan-2-ylmethyl]-1H-1,2,4-triazol (III.12)

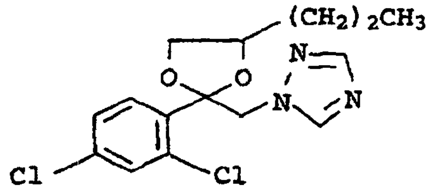

- (R,S)-1-(4-Chlorphenyl)-4,4-dimethyl-3-(1H-1,2,4-triazol-1-ylmethyl)-pentan-3-ol (III.13)

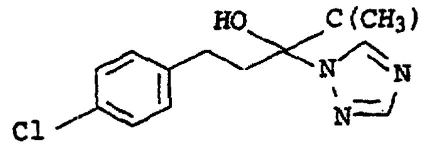

- (+)-2-(2,4-Dichlorphenyl)-3-(1H-1,2,4-triazol-yl)-propyl- 1,1,2,2-tetrafluorethylether (III.14)

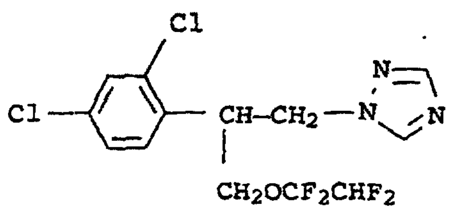

- (E) -1- [1-[[4-Chlor-2-(trifluormethyl) -phenyl] imino]-2-propoxyethyl]-1H-imidazol (III.15)

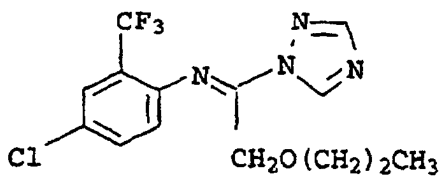

- (RS)-2,4'-Difluor-α-(1H-1,2,4-triazol-1-yl-methyl)-benzhydroyl-alkohol (III.16)

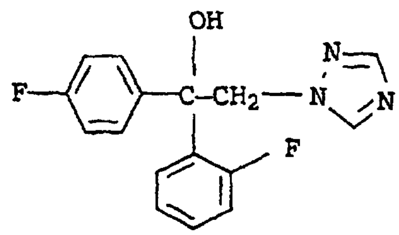

- 2-p-Chlorphenyl-2-(1H-1,2,4-triazol-1-ylmethyl)-hexanenitril (III.17)

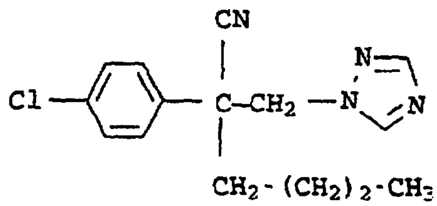

in einer synergistisch wirksamen Menge enthalten.

Außerdem betrifft die Erfindung Verfahren zur Bekämpfung von Schadpilzen mit Mischungen der Verbindungen I, II und III und die Verwendung der Verbindungen I, II und III zur Herstellung derartiger Mischungen.

Die Verbindungen I werden in der Literatur als Fungizide und Insektizide beschrieben (DE-Anm. Nr. 19 528 651.0), WO-A 95/21,153 und WO-A 95/21,154).

Ebenfalls bekannt sind die Verbindungen IIa (EP-A 253 213), IIb (EP-A 477 631) und die Verbindung IIc (EP-A 382 375), deren Herstellung und deren Wirkung gegen Schadpilze.

Die Azolderivate III, deren Herstellung und deren Wirkung gegen Schadpilze sind dem Fachmann aus der Literatur bekannt:

III.1: common name: Bromuconazol, Proc. Br. Crop Prot. Conf.-Pests Dis., 5-6, 439 (1990);
III.2: common name: Cyproconazol, US-A 4,664,696;
III.3: common name: Difenoconazol, GB-A 2,098,607;
III.4: common name: Diniconazol, CAS RN [83657-24-3];
III.5: common name (vorgeschlagen): Epoxiconazol, EP-A 196 038;
III.6: common name: Fenbuconazol (vorgeschlagen), EP-A 251 775;
III.7: common name: Fluquinconazol, Proc. Br. Crop Prot. Conf.-Pests Dis., 5-3, 411 (1992);
III.8: common name: Flusilazol, Proc. Br. Crop Prot. Conf.-Pests Dis., 1, 413 (1984);
III.9: common name: Hexaconazol, CAS RN [79983-71-4];
III.10: common name: Metconazol, Proc. Br. Crop Prot. Conf.-Pests Dis., 5-4, 419 (1992);
III.11: common name: Prochloraz, US-A 3,991,071;
III.12: common name: Propiconazol, GB-A 1,522,657;
III.13: common name: Tebuconazol, US-A 4,723,984;
III.14: common name: Tetraconazol, Proc. Br. Crop Prot. Conf.-Pests Dis., 1, 49 (1988);
III.15: common name: Triflumizol, JP-A 79/119,462
III.16: common name: Flutriafol, CAS RN [76674-21-0]
III.17: common name: Myclobutanil, CAS RN [88671-89-0].

Im Hinblick auf eine Senkung der Aufwandmengen und eine Verbesserung des Wirkungsspektrums der bekannten Verbindungen lagen der vorliegenden Erfindung Mischungen als Aufgabe zugrunde, die bei verringerter Gesamtmenge an ausgebrachten Wirkstoffen eine verbesserte Wirkung gegen Schadpilze zeigen (synergistische Mischungen).

Demgemäß wurden die eingangs definierten Mischungen gefunden. Es wurde außerdem gefunden, daß sich bei gleichzeitiger gemeinsamer oder getrennter Anwendung der Verbindungen I und II oder III oder bei Anwendung der Verbindungen I und II oder III nacheinander Schadpilze besser bekämpfen lassen als mit den Einzelverbindungen.

Die allgemeine Formel I steht insbesondere repräsentativ für Oximether, in denen X Sauerstoff und Y CH bedeutet oder X Amino und Y N bedeutet.

Außerdem werden Verbindungen I bevorzugt, in denen Z für Sauerstoff steht.

Gleichermaßen werden Verbindungen I bevorzugt, in denen R' für Alkyl und Benzyl steht.

Im Hinblick auf ihre Verwendung in den erfindungsgemäßen synergistischen Mischungen werden insbesondere die in den folgenden Tabellen zusammengestellten Verbindungen I bevorzugt:

Tabelle 1

Verbindungen der Formel IA, in denen ZR' für eine Verbindung jeweils einer Zeile der Tabelle B entspricht

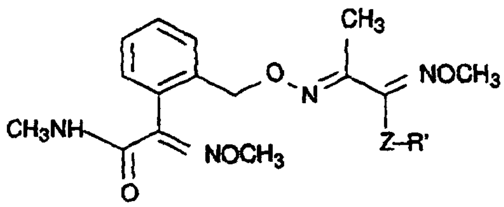

(IA)

Tabelle 2

Verbindungen der Formel IB, in denen ZR' für eine Verbindung jeweils einer Zeile der Tabelle B entspricht

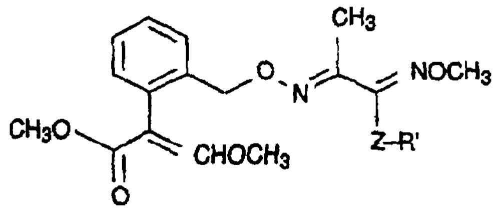

(IB)

Tabelle B:

| Nr. | ZR' |
|---|---|
| I.1 | $O-CH_2CH_2CH_3$ |
| I.2 | $O-CH(CH_3)_2$ |
| I.3 | $O-CH_2CH_2CH_2CH_3$ |
| I.4 | $O-CH(CH_3)CH_2CH_3$ |
| I.5 | $O-CH_2CH(CH_3)_2$ |
| I.6 | $O-C(CH_3)_3$ |
| I.7 | $S-C(CH_3)_3$ |
| I.8 | $O-CH(CH_3)CH_2CH_2CH_3$ |
| I.9 | $O-CH_2C(CH_3)_3$ |
| I.10 | $O-C(Cl)=CCl_2$ |
| I.11 | $O-CH_2CH=CH-Cl$ (trans) |
| I.12 | $O-CH_2-C(CH_3)=CH_2$ |
| I.13 | $O-CH_2-$(cyclopropyl) |
| I.14 | $O-CH_2-C_6H_5$ |
| I.15 | $O-CH_2-[4-F-C_6H_4]$ |
| I.16 | $O\cdot CH_2\cdot CH_3$ |
| I.17 | $O\cdot CH(CH_2CH_3)_2$ |

Die Verbindungen der Formeln I und II können in Bezug auf die C=Y- bzw. C=CH- oder C=N-Doppelbindungen in der E- oder der Z-Konfiguration (in Bezug auf die Carbonsäurefunktion) vorliegen. Demgemäß können sie in der erfindungsgemäßen Mischung jeweils entweder als reine E- oder Z-Isomere oder als E/Z-Isomerenmischung Verwendung finden. Bevorzugt findet die E/Z-Isomerenmischung oder das Z-Isomer Anwendung, wobei das Z-Isomere besonders bevorzugt ist.

Die C=N-Doppelbindungen der Oximethergruppierungen in der Seitenkette der Verbindungen I können jeweils als reine E- oder Z-Isomere oder als E/Z-Isomerengemische vorliegen. Die Verbindungen I können sowohl als Isomer engemische als auch als reine Isomere in den erfindungsgemäßen Mischungen verwendet werden. Im Hinblick auf ihre Verwendung werden insbesondere Verbindungen I bevorzugt, in denen die endständige Oximethergruppierung der Seitenkette in der cis-Konfiguration vorliegt ($OCH_3$ zu ZR').

Die Verbindungen I, II und III sind wegen ihres basischen Charakters in der Lage, mit anorganischen oder organischen Säuren oder mit Metallionen Salze oder Addukte zu bilden.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure und Salpetersäure.

Als organische Säuren kommen beispielsweise Ameisensäure, Kohlensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc., in Betracht.

Als Metallionen kommen insbesondere die Ionen der Elemente der zweiten Hauptgruppe, insbesondere Calzium und Magnesium, der dritten und vierten Hauptgruppe, insbesondere Aluminium, Zinn und Blei, sowie der ersten bis achten Nebengruppe, insbesondere Chrom, Mangan, Eisen, Kobalt, Nickel, Kupfer, Zink und andere in Betracht. Besonders bevorzugt sind die Metallionen der Elemente der Nebengruppen der vierten Periode. Die Metalle können dabei in den verschiedenen ihnen zukommenden Wertigkeiten vorliegen.

Bevorzugt setzt man bei der Bereitstellung der Mischungen die reinen Wirkstoffe I, II und III ein, denen man je nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel beimischen kann.

Gegenstand der vorliegenden Erfindung sind binäre Mischungen aus Verbindungen I mit einer Verbindung II oder III; es können jedoch auch temäre Mischungen, die 3 Komponenten enthalten, eingesetzt werden.

Ein bevorzugtes Beispiel von Dreikomponentenmischungen sind solche, die als Komponente III bevorzugt die Verbindungen III.1, III.4, III.5 und III.10, besonders bevorzugt die Verbindung III.5 (Epoxiconazol) enthalten.

Die Mischungen der Verbindungen I und II oder III bzw. die gleichzeitige gemeinsame oder getrennte Verwendung der Verbindungen I, II und III zeichnen sich durch eine hervorragende Wirkung gegen ein breites Spektrum von pflanzenpathogenen Pilzen, insbesondere aus der Klasse der Ascomyceten, Deuteromyceten, Phycomyceten und Basidiomyceten, aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen und Kürbisgewächse), Gerste, Gras, Hafer, Kaffee, Mais, Obstpflanzen, Reis, Roggen, Soja, Wein, Weizen, Zierpflanzen, Zuckerrohr und einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Puccinia-Arten an Getreide, Rhizoctonia-Arten an Baumwolle, Reis und Rasen, Ustilago-Arten an Getreide und Zuckerrohr, Venturia inaequalis (Schorf) an Äpfeln. Helminthosporium-Arten an Getreide, Septoria nodorum an Weizen, Botrytis cinerea (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Pseudoperonospora-Arten an Kürbisgewächsen und Hopfen, Plasmopara viticola an Reben, Alternaria-Arten an Gemüse und Obst sowie Fusarium- und Verticillium-Arten.

Sie sind außerdem im Materialschutz (z.B. Holzschutz) anwendbar, beispielsweise gegen Paecilomyces variotii.

Die Verbindungen I, II und III können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Die Verbindungen I und II werden üblicherweise in einem Gewichtsverhältnis von 10:1 bis 0,1:1, vorzugsweise 5:1 bis 0,2:1, insbesondere 3:1 bis 0,3:1 angewandt.

Die Verbindungen I und III werden üblicherweise in einem Gewichtsverhältnis von 10:1 bis 0,1:1, vorzugsweise 5:1 bis 0,5:1, insbesondere 3:1 bis 0,2:1 (III:I) angewandt.

Die Aufwandmengen der erfindungsgemäßen Mischungen liegen je nach Art des gewünschten Effekts für die Verbindungen I bei 0,005 bis 0,5 kg/ha, vorzugsweise 0,005 bis 0,5 kg/ha, insbesondere 0,01 bis 0,3 kg/ha.

Die Aufwandmengen für die Verbindungen II liegen entsprechend in der Regel bei 0,01 bis 1 kg/ha, vorzugsweise 0,05 bis 0,5 kg/ha, insbesondere 0,1 bis 0,5 kg/ha.

Die Aufwandmengen für die Verbindungen III liegen im allgemeinen bei 0,01 bis 1 kg/ha, vorzugsweise 0,05 bis 1 kg/ha, insbesondere 0,05 bis 0,5 kg/ha.

Bei der Saatgutbehandlung werden im allgemeinen Aufwandmengen an Mischung von 0,001 bis 100 g/kg Saatgut, vorzugsweise 0,01 bis 50 g/kg, insbesondere 0,01 bis 10 g/kg verwendet.

Sofern für Pflanzen pathogene Schadpilze zu bekämpfen sind, erfolgt die getrennte oder gemeinsame Applikation der Verbindungen I und II oder III oder der Mischungen aus den Verbindungen I, II und III durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I, II und III können

beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Fcrmaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylenalkylether, Laurylalkoholpolyglycoletheracetat, Sorbitester, Lignin-Sulfitablaugen oder Methylcellulose in Betracht.

Pulver, Streu- und Stäubemittel können durch Mischen oder gemeinsames Vermahlen der Verbindungen I und II oder III oder der Mischung aus den Verbindungen I und II oder III mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Kalzium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I, II oder III bzw. der Mischung aus den Verbindungen I und II bzw. III. Die Wirkstoffe werden dabei in einer Reinheit von 90 % bis 100 %, vorzugsweise 95 % bis 100 % (nach NMR- oder HPLC-Spektrum) eingesetzt.

Die Verbindungen I und II oder III bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I, II und III bei getrennter Ausbringung, behandelt. Die Anwendung kann vor oder nach dem Befall durch die Schadpilze erfolgen.

Die fungizide Wirkung der Verbindung und der Mischungen läßt sich durch folgende Versuche zeigen:

Die Wirkstoffe werden getrennt oder gemeinsam als 10 %ige Emulsion in einem Gemisch aus 70 Gew.-% Cyclohexanon, 20 Gew.-% Nekanil® LN (Lutensol® AP6, Netzmittel mit Emulgier- und Dispergierwirkung auf der Basis ethoxylierter Alkylphenole) und 10 Gew.-% Emulphor® EL (Emulan® EL, Emulgator auf der Basis ethoxylierter Fettalkohole) aufbereitet und entsprechend der gewünschten Konzentration mit Wasser verdünnt.

Die Auswertung erfolgt durch Feststellung der befallenen Blattflächen in Prozent. Diese Prozent-Werte werden in Wirkungsgrade umgerechnet. Die zu erwartenden Wirkungsgrade der Wirkstoffmischungen werden nach der Colby Formel [R.S. Colby, Weeds 15, 20-22 (1967)] ermittelt und mit den beobachteten Wirkungsgraden verglichen.

Colby Formel:

$$E = x + y + z - x \cdot y \cdot z/100$$

E zu erwartender Wirkungsgrad, ausgedrückt in % der unbehandelten Kontrolle, beim Einsatz der Mischung aus den Wirkstoffen A, B und C in den Konzentrationen a, b und c

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

z der Wirkungsgrad, ausgedrückt in % der unbehandelten Kontrolle, beim Einsatz des Wirkstoffs C in der Konzentration c

Der Wirkungsgrad (W) wird nach der Formel von Abbot wie folgt berechnet:

$$W = (1 - \alpha)\bullet 100/\beta$$

$\alpha$ entspricht dem Pilzbefall der behandelten Pflanzen in % und

$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.

Beispiele 1-8 - Wirksamkeit gegen Puccinia recondita an Weizen (Weizenbraunrost)

Blätter von in Töpfen gewachsenen Weizensämlingen der Sorte "Frühgold" wurden mit Sporen des Braunrostes (Puccinia recondita) bestäubt. Danach wurden die Töpfe für 24 Stunden in eine Kammer mit hoher Luftfeuchtigkeit (90 bis 95 %) und 20 bis 22°C gestellt. Während dieser Zeit keimten die Sporen aus und die Keimschläuche drangen in das Blattgewebe ein. Die infizierten Pflanzen wurden am nächsten Tag mit einer wäßrigen Spritzbrühe, die mit einer Stammlösung aus 10 % Wirkstoff, 63 % Cyclohexanon und 27 % Emulgiermittel angesetzt worden war, tropfnaß besprüht. Nach dem Antrocknen des Spritzbelages wurden die Versuchspflanzen im Gewächshaus bei Temperaturen zwischen 20 und 22°C und 65 bis 70 % relativer Luftfeuchte für 7 Tage kultiviert.

Dann wurde das Ausmaß der Rostpilzentwicklung auf den Blättern ermittelt.

Die visuell ermittelten Werte für den Prozentanteil befallener Blattfläche wurden in Wirkungsgrade als % der unbehandelten Kontrolle umgerechnet. Wirkungsgrad 0 ist gleicher Befall wie in der unbehandelten Kontrolle. Wirkungsgrad 100 ist 0 % Befall. Die zu erwartenden Wirkungsgrade für Wirkstoffkombinationen wurden nach der Colby-Formel (Colby, S. R. "Calculating synergistic and antagonistic responses of herbicide Combinations", Weeds, 15, S. 20-22, 1967) ermittelt und mit den beobachteten Wirkungsgraden verglichen.

Tabelle 3

| | Wirkstoff oder Kombinationen | Wirkstoffkonzentration in der Spritzbrühe in ppm | Wirkungsgrad in % der unbehandelten Kontrolle |
|---|---|---|---|
| 1V | Kontrolle (unbebandelt) | (100 % Befall) | 0 |
| 2V | A = Verbindung Nr. I.2 gemäß Tabelle 1 | 4<br>1 | 30<br>0 |
| 3V | Verbindung IIa | 4<br>1 | 0<br>0 |
| 4V | Verbindung IIb | 4<br>1 | 0<br>0 |

Tabelle 4

| Bsp. | Wirkstoffkonzentration in der Spritzbrühe in ppm | beobachteter Wirkungsgrad | berechneter Wirkungsgrad*) |
|---|---|---|---|
| 5 | 4A + 4IIIa | 40 | 30 |
| 6 | 1A + 1IIa | 20 | 0 |
| 7 | 4A + 4Iba | 50 | 30 |
| 8 | 1A +1IIb | 25 | 0 |

*) berechnet nach Colby

Aus den Ergebnissen des Versuches geht hervor, daß der beobachtete Wirkungsgrad in allen Mischungsverhältnissen höher ist, als der nach der Colby-Formel vorausberechnete Wirkungsgrad.

Beispiele 9-20 - Wirksamkeit gegen Weizenmehltau

Blätter von in Töpfen gewachsenen Weizenkeimlingen der Sorte "Frühgold" wurden mit wäßriger Wirkstoffaufbereitung, die aus einer Stammlösung bestehend aus 10 % Wirkstoff, 63 % Cyclohexanon und 27 % Emulgiermittel angesetzt wurde, bis zur Tropfnässe besprüht und 24 Stunden nach dem Antrocknen des Spritzbelages mit Sporen des Weizenmehltaus (Erysiphe graminis forma specialis tritici) bestäubt. Die Versuchspflanzen wurden anschließend im Gewächshaus bei Temperaturen zwischen 20 und 22°C und 75 bis 80 % realtiver Luftfeuchtigkeit aufgestellt. Nach 7 Tagen wurde das Ausmaß der Mehltauentwicklung visuell in % Befall der gesamten Blattfläche ermittelt.

Die visuell ermittelten Werte für den Prozentanteil befallener Blattfläche wurden in Wirkungsgrade als % der unbehandelten Kontrolle, umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 - 22, 1967) ermittelt und mit den beobachteten Wirkungsgraden verglichen.

Tabelle 5

| Bsp. | Wirkstoff | Wirkstoffkonzentration in der Spritzbrühe in ppm | Wirkungsgrad in % der unbehandelten Kontrolle |
|---|---|---|---|
| 9V | Kontrolle (unbehandelt) | 92 % Befall) | 0 |
| 10V | Verbindung Nr. I.2 gemäß Tab. 1 = A | 0,4 | 84 |
| 11V | Verbindung Nr. I.4 gemäß Tab. 1 = B | 0,8<br>0,4 | 84<br>73 |
| 12V | III. 8 = Flusilazol | 0,4 | 14 |
| 13V | III. 9 = Hexaconazol | 0,4 | 0 |
| 14V | III. 12 = Propiconazol | 0,8<br>0,4 | 0<br>0 |

Tabelle 6

| Bsp. | Wirkstoffkonzentration in der Spritzbrühe in ppm | beobachteter Wirkungsgrad | berechneter Wirkungsgrad* |
|---|---|---|---|
| 15 | 0,4 A + 0,4 III.8 | 98 | 86 |
| 16 | 0,4A + 0,4 III.9 | 95 | 84 |
| 17 | 0,4 A + 0,4 III.12 | 99 | 84 |
| 18 | 0,4 B + 0,4 III.8 | 95 | 77 |
| 19 | 0,4 B + 0,4 III.9 | 88 | 73 |
| 20 | 0,4 B + 0,4 III.12 | 94 | 84 |

*) berechnet nach der Colby-Formel

Aus den Ergebnissen des Versuches geht hervor, daß der beobachtete Wirkungsgrad in allen Mischungsverhältnissen höher ist, als der nach der Colby-Formel vorausberechnete Wirkungsgrad.

## Patentansprüche

**1.** Fungizide Mischungen, enthaltend

a) einen Oximether der Formel I,

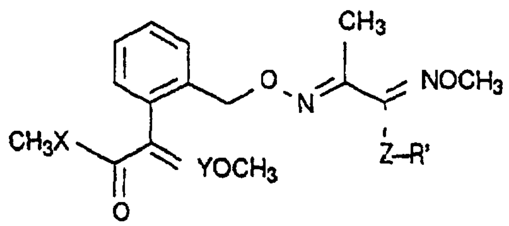

(I)

in der die Substituenten die folgende Bedeutung haben:

X Sauerstoff oder Amino (NH);

Y CH oder N;

Z Sauerstoff, Schwefel, Amino (NH) oder $C_1$-$C_4$-Alkylamino (N-$C_1$-$C_4$-Alkyl);

R' $C_1$-$C_6$-Alkyl, $C_1$-$C_6$-Halogenalkyl, $C_3$-$C_6$-Alkenyl, $C_2$-$C_6$-Halogenalkenyl, $C_3$-$C_6$-Alkinyl, $C_3$-$C_6$-Halogenalkinyl, $C_3$-$C_6$-Cycloalkyl-methyl, oder Benzyl, welches partiell oder vollständig halogeniert sein kann und/oder einen bis drei der folgenden Reste tragen kann: Cyano, $C_1$-$C_4$-Alkyl, $C_1$-$C_4$-Halogenalkyl, $C_1$-$C_4$-Alkoxy, $C_1$-$C_4$-Halogenalkoxy und $C_1$-$C_4$-Alkylthio;

und mindestens eine Verbindung aus den Gruppen b)-c):

b.1) der Oximethercarbonsäureester der Formel IIa,

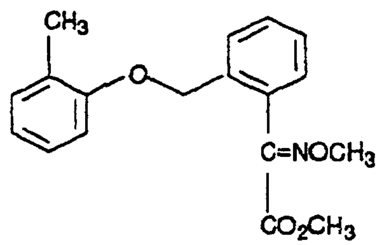

(IIa)

b.2) das Oximethercarbonsäureamid der Formel IIb

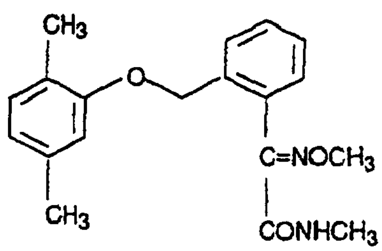

(IIb)

b.3)der Methoxyacrylsäureester der Formel IIc,

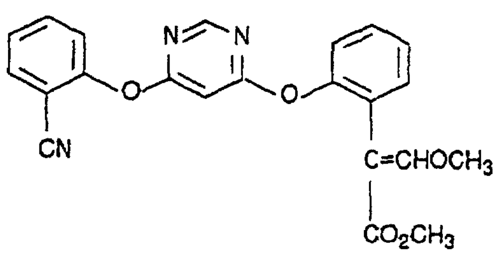

(IIc)

und/oder

c) ein Azolderivat III ausgewählt aus der Gruppe der Verbindungen III.1 bis III.17

- 1-[(2RS,4RS;2RS,4SR)-4-Brom-2-(2,4-dichlorphenyl)tetrahydrofuryl]-1H-1,2,4-triazol (III.1)

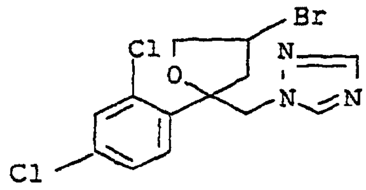

- 2-(4-Chlorphenyl)-3-cyclopropyl-1-(1H-1,2,4-triazol-1-yl)-butan-2-ol (III.2)

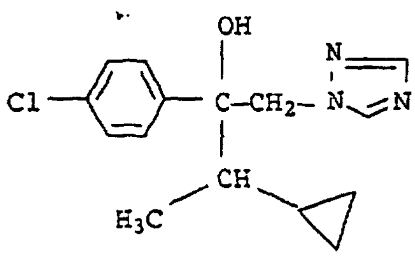

- (+)-4-Chlor-4-[4-methyl-2-(1H-1,2,4-triazol-1-ylmethyl)-1,3-dioxolan-2-yl]-phenyl-4-chlorphenylether (III. 3)

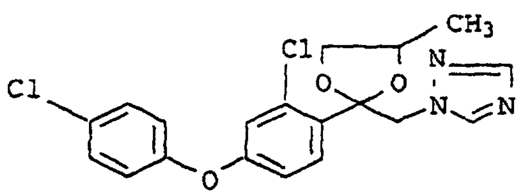

- (E)-(R,S)-1-(2,4-Dichlorphenyl)-4,4-dimethyl-2-(1H-1,2,4- triazol-1-yl)pent-1-en-3-ol (III.4)

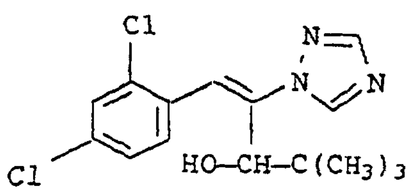

- (Z)-2-(1H-1,2,4-Triazol-1-ylmethyl)-2-(4-fluorphenyl)-3-(2-chlorphenyl)-oxiran (III.5)

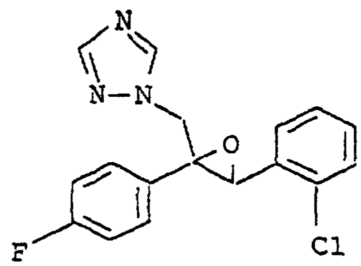

- 4-(4-Chlorphenyl)-2-phenyl-2-(1H-1,2,4-triazolylmethyl)-butyronitril (III.6)

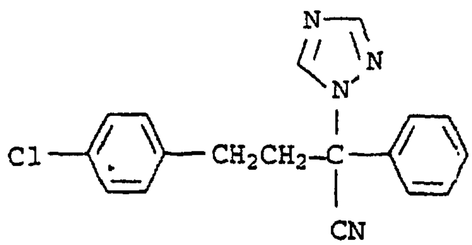

- 3-(2,4-Dichlorphenyl)-6-fluor-2-(1H-1,2,4-triazol-1-yl)chinazolin-4(3H)-on (III.7)

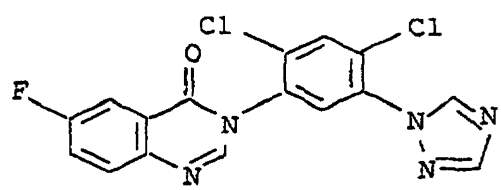

- Bis(4-fluorphenyl)(methyl)(1H-1,2,4-triazol-1-ylmethyl)silan (III.8)

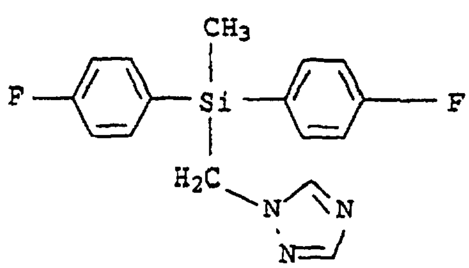

- (R,S)-2-(2,4-Dichlorphenyl)-1-(1H-1,2,4-triazol-1-yl)-hexan-2-ol (III.9)

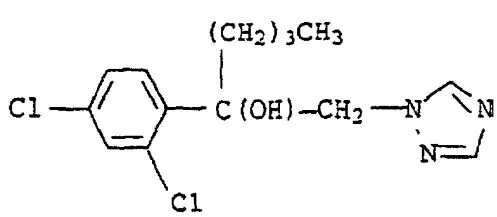

- (1RS,5RS;1RS,5SR)-5-(4-Chlorbenzyl)-2,2-dimethyl-1-(1H-1,2,4-triazol-1-ylmethyl)cyclopentanol (III. 10)

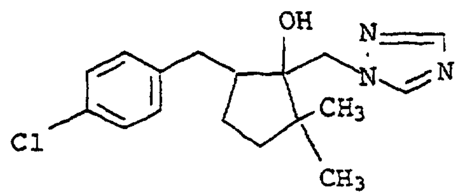

- N-Propyl-N- [2-(2,4,6-trichlorphenoxy)ethyl]imidazol 1-carboxamid (III.11)

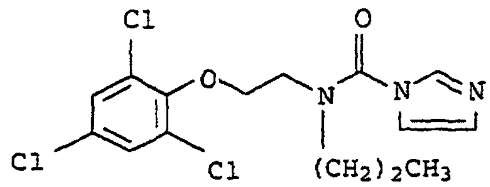

- (+)-1-[2-(2,4-Dichlorphenyl)-4-propyl-1,3-dioxolan-2-ylmethyl]-1H-1,2,4-triazol (III.12)

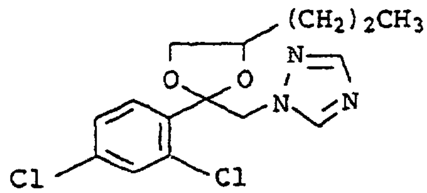

- (R,S)-1-(4-Chlorphenyl)-4,4-dimethyl-3-(1H-1,2,4-triazol-1-ylmethyl)-pentan-3-ol (III.13)

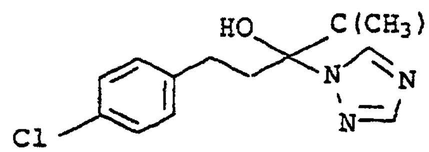

- (+)-2-(2,4-Dichlorphenyl)-3-(1H-1,2,4-triazol-yl)-propyl- 1,1,2,2-tetrafluorethylether (III.14)

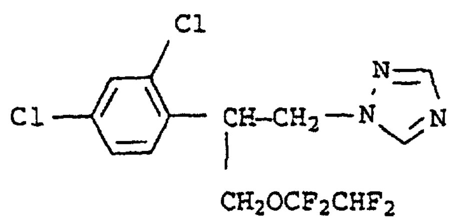

- (E)-1-[1-[[4-Chlor-2-(trifluormethyl)-phenyl]imino]-2-propoxyethyl]-1H-imidazol (III.15)

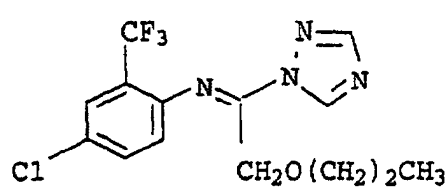

- (RS)-2,4'-Difluor-α-(1H-1,2,4-triazol-1-yl-methyl)-benzhydroyl-alkohol (III.16)

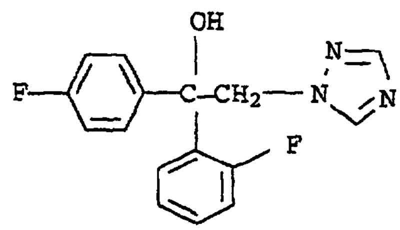

- 2-p-Chlorphenyl-2-(1H-1,2,4-triazol-1-ylmethyl)-hexanenitril (III.17)

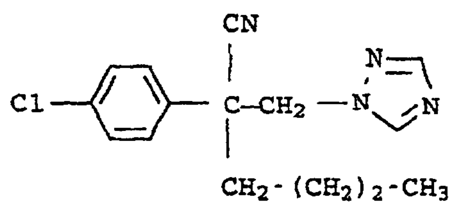

in einer synergistisch wirksamen Menge enthalten.

**2.** Fungizide Mischung nach Anspruch 1, enthaltend IIa.

**3.** Fungizide Mischung nach Anspruch 1, enthaltend IIb.

**4.** Fungizide Mischung nach Anspruch 1, enthaltend IIc.

**5.** Fungizide Mischung nach Anspruch 1, enthaltend eines oder mehrere der Azolderivate III.1, III.4, III.5 und/oder III.10.

**6.** Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit einer Verbindung der Formel I gemäß Anspruch 1 und einer Verbindung der Formeln II und/ oder III gemäß Anspruch 1 in einer synergistisch wirksamen Menge behandelt.

**7.** Verfahren nach Anspruch 6, **dadurch gekennzeichnet, daß** man die Schadpilze, deren Lebensraum oder die von ihnen freizuhaltenden Pflanzen, Samen, Böden, Flächen, Materialien oder Räume mit 0,005 bis 0,5 kg/ha einer Verbindung I gemäß Anspruch 1 behandelt.

## Claims

**1.** A fungicidal mixture comprising

a) an oxime ether of the formula I

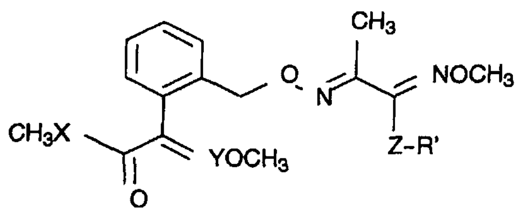

(I)

where the substituents have the following meanings:

X is oxygen or amino (NH);

Y is CH or N;

Z is oxygen, sulfur, amino (NH) or $C_1$-$C_4$-alkylamino (N-$C_1$-$C_4$-alkyl);

R' is $C_1$-$C_6$-alkyl, $C_1$-$C_6$-haloalkyl, $C_3$-$C_6$-alkenyl, $C_2$-$C_6$-haloalkenyl, $C_3$-$C_6$-alkynyl, $C_3$-$C_6$-haloalkynyl, $C_3$-$C_6$-cycloalkylmethyl, or is benzyl which can be partially or fully halogenated and/or can have attached to it one to three of the following radicals: cyano, $C_1$-$C_4$-alkyl, $C_1$-$C_4$-haloalkyl, $C_1$-$C_4$-alkoxy, $C_1$-$C_4$-haloalkoxy and $C_1$-$C_4$-alkylthio;

and at least one compound from groups b)-c):

b.1)the oxime ether carboxylate of the formula IIa,

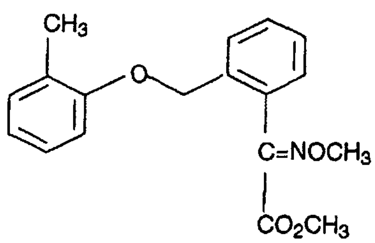

(IIa)

b.2)the oxime ether carboxamide of the formula IIb

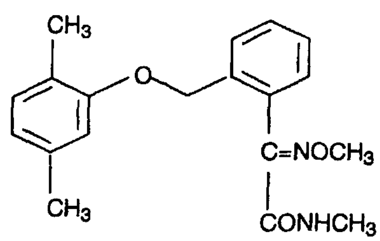

(IIb)

b.3)the methoxyacrylate of the formula IIc,

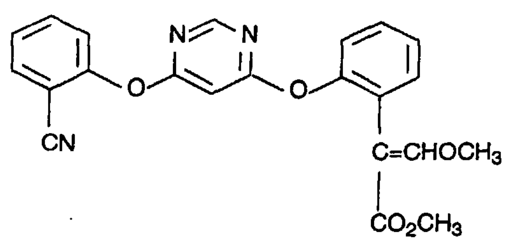

(IIc)

and/or

c) an azole derivative III selected from the group of the compounds III.1 to III.17

- 1-[(2RS,4RS;2RS,4SR)-4-bromo-2-(2,4-dichlorophenyl)-tetrahydrofuryl]-1H-1,2,4-triazole (III.1)

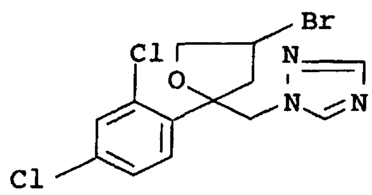

- 2-(4-chlorophenyl)-3-cyclopropyl-1-(1H-1,2,4-triazol-1-yl)butan-2-ol (III.2)

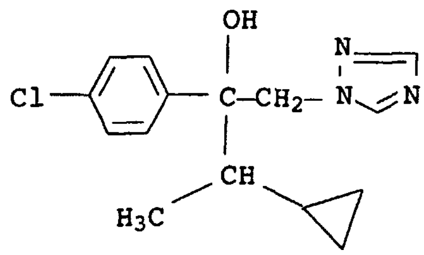

- (+)-4-chloro-4-[4-methyl-2-(1H-1,2,4-triazol-1-ylmethyl)-1,3-dioxolan-2-yl]phenyl 4-chlorophenyl ether (III.3)

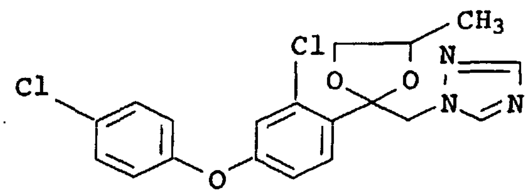

- (E)-(R,S)-1-(2,4-dichlorophenyl)-4,4-dimethyl-2-(1H-1,2,4-triazol-1-yl)pent-1-en-3-ol (III.4)

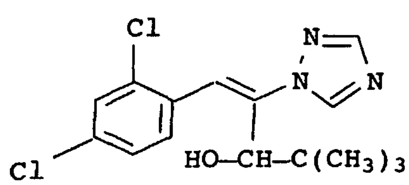

- (Z)-2-(1H-1,2,4-triazol-1-ylmethyl)-2-(4-fluorophenyl)-3-(2-chlorophenyl)oxirane (III.5)

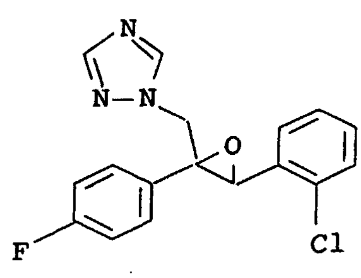

- 4-(4-chlorophenyl)-2-phenyl-2-(1H-1,2,4-triazolylmethyl)butyronitrile (III.6)

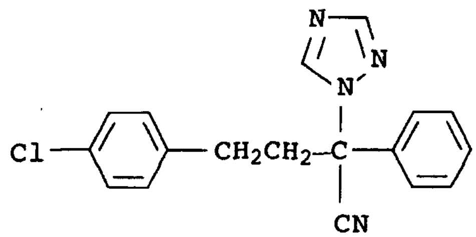

- 3-(2,4-dichlorophenyl)-6-fluoro-2-(1H-1,2,4-triazol-1-yl)quinazolin-4(3H)-one (III.7)

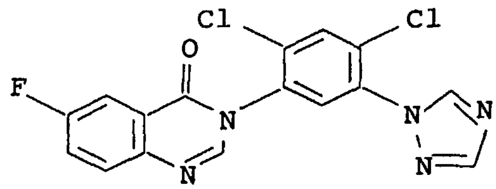

- bis(4-fluorophenyl)(methyl)(1H-1,2,4-triazol-1-ylmethyl)silane (III.8)

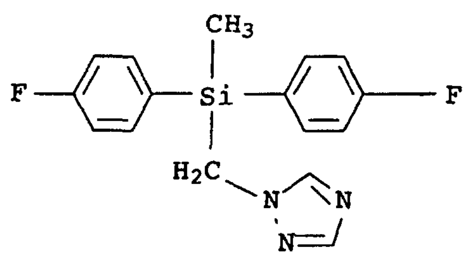

- (R,S)-2-(2,4-dichlorophenyl)-1-(1H-1,2,4-triazol-1-yl)hexan-2-ol (III.9)

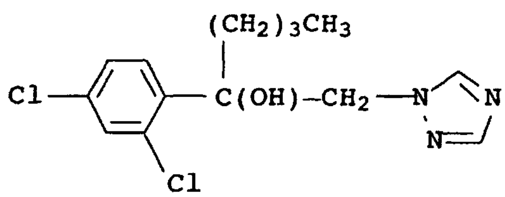

- (1RS,5RS;1RS,5SR)-5-(4-chlorobenzyl)-2,2-dimethyl-1-(1H-1,2,4-triazol-1-ylmethyl)cyclopentanol (III.10)

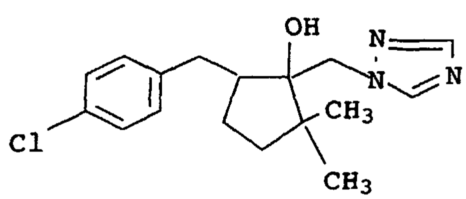

- N-propyl-N-[2-(2,4,6-trichlorophenoxy)ethyl]imidazol-1-carboxamide (III.11)

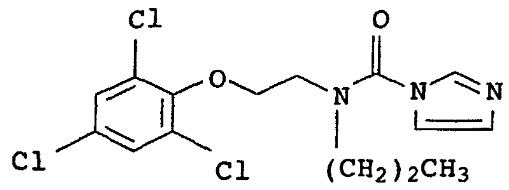

- (+)-1-[2-(2,4-dichlorophenyl)-4-propyl-1,3-dioxolan-2-ylmethyl]-1H-1,2,4-triazole (III.12)

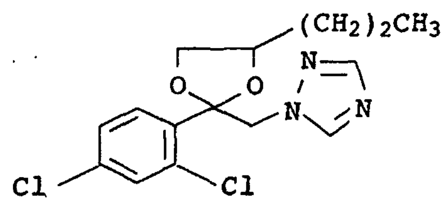

- (R,S)-1-(4-chlorophenyl)-4,4-dimethyl-3-(1H-1,2,4-triazol-1-ylmethyl)pentan-3-ol (III.13)

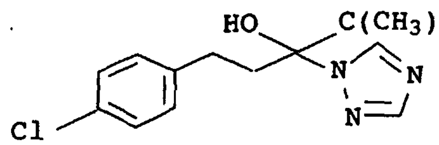

- (+)-2-(2,4-dichlorophenyl)-3-(1H-1,2,4-triazolyl)-propyl 1,1,2,2-tetrafluoroethyl ether (III.14)

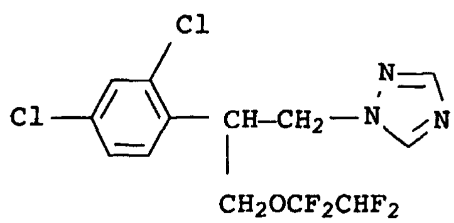

- (E)-1-[1-[[4-chloro-2-(trifluoromethyl)phenyl]imino]-2-propoxyethyl]-1H-imidazole (III.15)

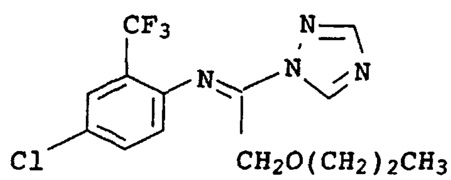

- (R,S)-2,4'-difluoro-α-(1H-1,2,4-triazol-1-ylmethyl)-benzhydryl alcohol (III.16)

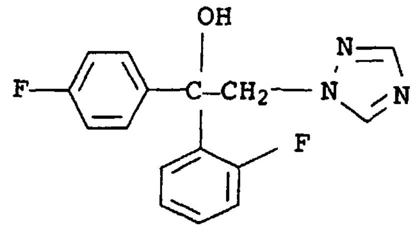

- 2-p-chlorophenyl-2-(1H-1,2,4-triazol-1-ylmethyl)-hexanenitrile (III.17)

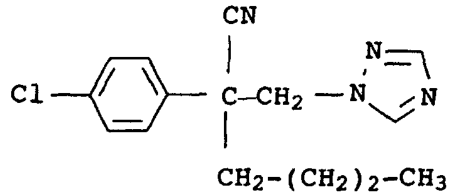

in a synergistically active amount.

2. A fungicidal mixture as claimed in claim 1 comprising IIa.

3. A fungicidal mixture as claimed in claim 1 comprising IIb.

4. A fungicidal mixture as claimed in claim 1 comprising IIc.

5. A fungicidal mixture as claimed in claim 1 comprising one or more of the azole derivatives III.1, III.4, III.5 and/or III.10.

6. A method for controlling harmful fungi, which comprises treating the harmful fungi, their environment, or the plants, seeds, soils, areas, materials or spaces to be kept free from them with a compound of the formula I as set forth in claim 1 and a compound of the formulae II and/or III as set forth in claim 1 in a synergistically active amount.

7. A method as claimed in claim 6, wherein the harmful fungi, their environment, or the plants, seeds, soils, areas, materials or spaces to be kept free from them are treated with from 0.005 to 0.5 kg/ha of a compound I as set forth in claim 1.

## Revendications

1. Mélanges fongicides contenant

a) un éther d'oxime de formule I

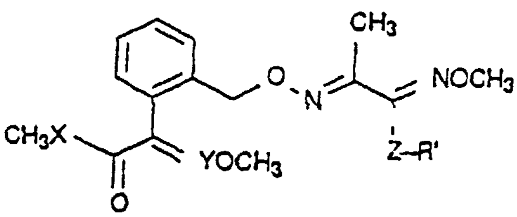

(I)

dans laquelle les symboles ont les significations suivantes :

X : l'oxygène ou un groupe amino (NH) ;

Y: CH ou N ;

Z : l'oxygène, le soufre, un groupe amino (NH) ou alkylamino en C1-C4 (N-alkyle en C1-C4) ;

R' : un groupe alkyle en C1-C6, halogénoalkyle en C1-C6, alcényle en C3-C6, halogénoalcényle en C2-C6, alcynyle en C3-C6, halogénoalcynyle en C3-C6, (cycloalkyle en C3-C6)méthyle ou benzyle, qui peut être halogéné en totalité ou en partie et/ou peut porter un à trois des substituants suivants : cyano, alkyle en C1-C4, halogénoalkyle en C1-C4, alcoxy en C1-C4, halogénoalcoxy en C1-C4 et alkylthio en C1-C4 ;

et au moins un composé des groupes b) à c) :

b.1) l'ester d'acide oximéthercarboxylique de formule IIa

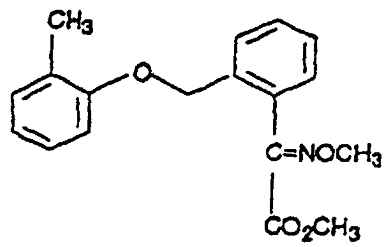

(IIa)

b.2) l'oximéthercarboxamide de formule IIb

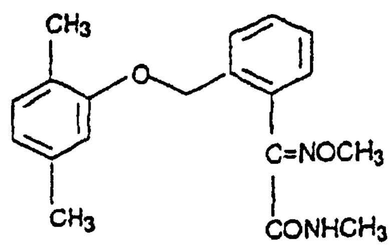

(IIb)

b.3) l'ester méthoxyacrylique de formule IIc

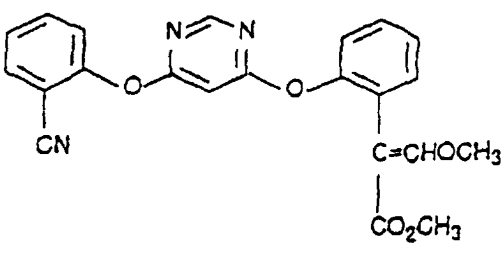

(IIc)

et/ou

c) un dérivé azolique III choisi dans le groupe des composés III.1 à III.17

- le 1-[(2RS,4RS ; 2RS, 4SR)-4-bromo-2-(2,4-dichlorophényl)-tétrahydrofuryl]-1H-1,2,4-triazole (III.1)

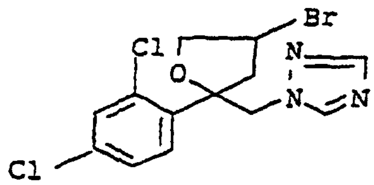

- le 2-(4-chlorophényl)-3-cyclopropyl-1-(1H-1,2,4-triazol-1-yl)butan-2-ol (III.2)

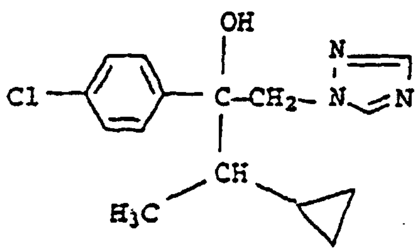

- l'éther (+)-4-chloro-4-[4-méthyl-2-(1H-1,2,4-triazol-1-ylméthyl)-1,3-dioxolan-2-yl]-phényl-4-chlorophénylique (III.3)

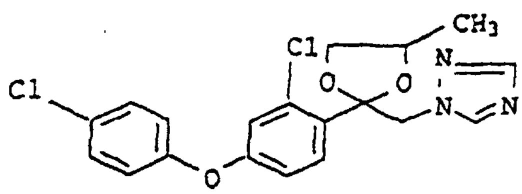

- le (E)-(R,S)-1-(2,4-dichlorophényl)-4,4-diméthyl-2-(1H-1,2,4-triazol-1-yl)-pent-1-én-3-ol (III.4)

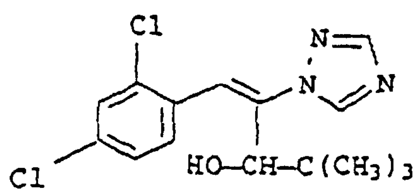

- le (Z)-2-(1H-1,2,4-triazol-1-ylméthyl)-2-(4-fluorophényl)-3-(2-chlorophényl)oxiranne (III.5)

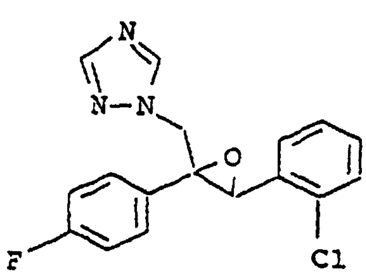

- le 4-(4-chlorophényl)-2-phényl-(1H-1,2,4-triazolylméthyl)-butyronitrile (III.6)

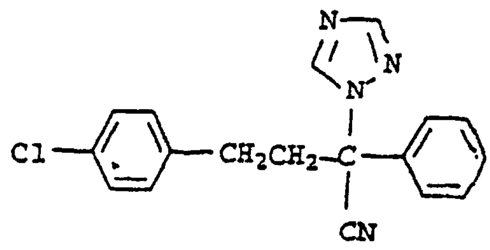

- la 3-(2,4-dichlorophényl)-6-fluoro-2-(1H-1,2,4-triazol-1-yl) quinazolin-4(3H)-one (III.7)

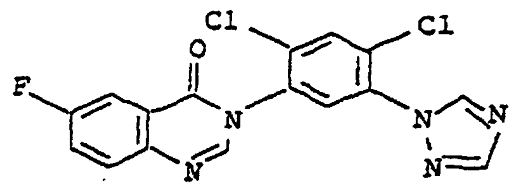

- le bis-(4-fluorophényl)(méthyl)(1H-1,2,4-triazol-1-ylméthyl)silane (III.8)

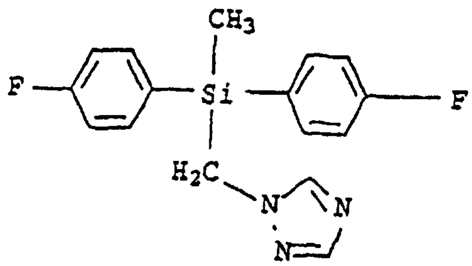

- le (R,S)-2-(2,4-dichlorophényl)-1-(1H-1,2,4-triazol-1-yl)-hexan-2-ol (III.9)

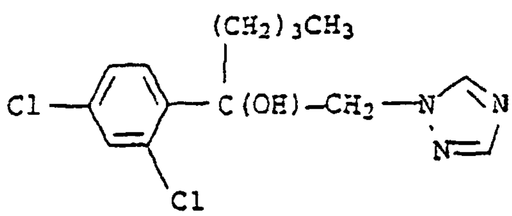

- le (1RS,5RS ; 1RS,5SR)-5-(4-chlorobenzyl)-2,2-diméthyl-1-(1H-1,2,4-triazol-1-ylméthyl)cyclopentanol (III.10)

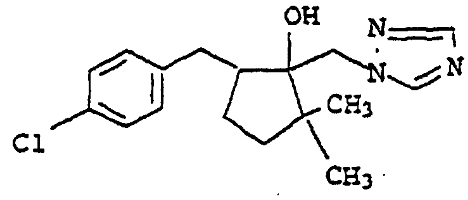

- le N-propyl-N-[2-(2,4,6-trichlorophénoxy)-éthyl]imidazole-1-carboxamide (III.11)

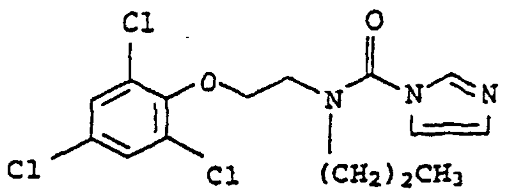

- le (+)-1-[2-(2,4-dichlorophényl)-4-propyl-1,3-dioxolan-2-ylméthyl]-1H-1,2,4-triazole (III.12)

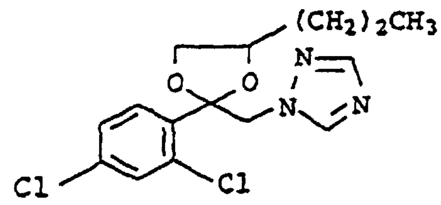

- le (R,S)-1-(4-chlorophényl)-4,4-diméthyl-3-(1H-1,2,4-triazol-1-ylméthyl)-pentan-3-ol (III.13)

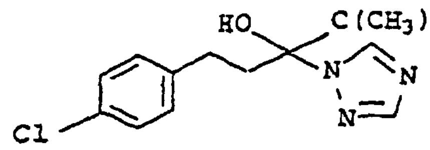

- l'éther (+)-2-(2,4-dichlorophényl)-3-(1H-1,2,4-triazolyl)propyl-1,1,2,2-tétrafluoréthylique (III.14)

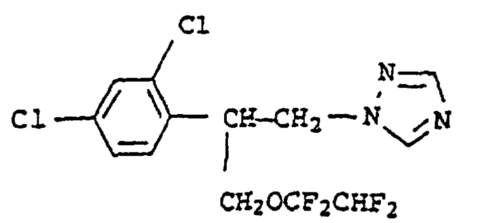

- le (E)-1-[1-[4-chloro-2-(trifluorométhyl)phényl]imino]propoxyéthyl]-1H-imidazole (III.15)

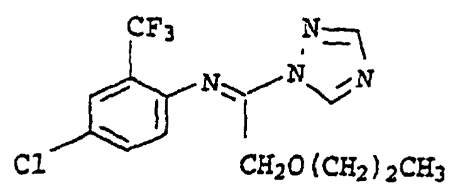

- l'alcool (RS)-2,4'-difluoro-alpha-(1H-1,2,4-triazol-1-ylméthyl)-benzhydroylique (III.16)

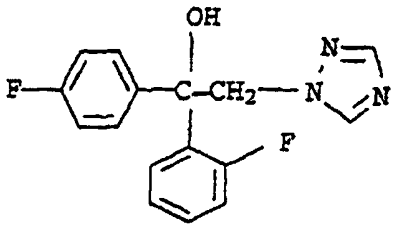

- le 2-p-chlorophényl-2-(1H-1,2,4-triazol-1-ylméthyl)hexanenitrile (III.17)

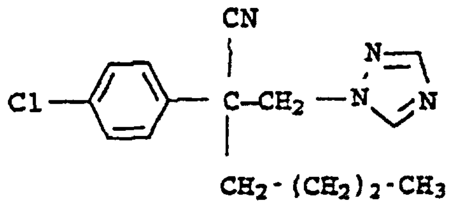

en quantité synergétique efficace.

**2.** Mélange fongicide selon la revendication 1, contenant IIa.

**3.** Mélange fongicide selon la revendication 1, contenant IIb.

**4.** Mélange fongicide selon la revendication 1, contenant IIc.

**5.** Mélange fongicide selon la revendication 1 contenant un ou plusieurs des dérivés azoliques III.1, III.4, 1.5 et/ou III.10.

**6.** Procédé pour combattre les mycètes nuisibles, **caractérisé par le fait que** l'on traite les mycètes nuisibles, leur habitat ou les végétaux, semences, sols, aires, matériaux ou locaux qu'on veut protéger contre les mycètes nuisibles, par un composé de formule I selon la revendication 1 et un composé de formule II et/ou III selon la revendication 1 en quantité synergétique efficace.

**7.** Procédé selon la revendication 6, **caractérisé par le fait que** l'on traite les mycètes nuisibles, leur habitat ou les végétaux, semences, sols, aires, matériaux ou locaux qu'on veut protéger contre les mycètes nuisibles, par 0,005 à 0,5 kg/ha d'un composé I selon la revendication 1.